# EUROPÄISCHE PATENTSCHRIFT

(11) **EP 2 246 606 B1**
(45) Veröffentlichungstag und Bekanntmachung des Hinweises auf die Patenterteilung: **20.06.2018**
(21) Anmeldenummer: 10450048.3
(22) Anmeldetag: 24.03.2010
(51) Int. Cl.: F16L 33/22, F16L 37/088, F16L 33/207, F16L 13/14

(54) **Anschlussvorrichtung für ein Kunststoffrohr an einem Anschlussnippel**
Device for connecting a composite tube to a connection nipple
Dispositif de raccordement pour un tuyau composite sur un élément de raccord

(30) Priorität: 28.04.2009 AT 6462009
(43) Veröffentlichungstag der Anmeldung: 03.11.2010
(73) Patentinhaber: KE KELIT Kunststoffwerk Gesellschaft m.b.H., 4020 Linz (AT)
(72) Erfinder: Ratschmann, Elmar, Dipl.-Ing., 4020 Linz (AT)
(74) Vertreter: Patentanwaltskanzlei Hübscher

(56) Entgegenhaltungen:
- EP-A1- 0 940 620
- EP-A2- 1 662 190
- EP-A2- 1 813 850
- DE-T2- 60 018 259
- FR-A1- 2 829 828

## Beschreibung

Die Erfindung bezieht sich auf eine Anschlussvorrichtung für ein Kunststoffrohr an einem Anschlussnippel, wobei das mit einer stirnseitigen Anfasung im Bereich des Innen- und des Außendurchmessers versehene Anschlussende des Kunststoffrohrs zwischen dem Anschlussnippel und einer Klemmhülse axial festgehalten ist und einen im profilierten Anschlussnippel gehaltenen Dichtungsring übergreift.

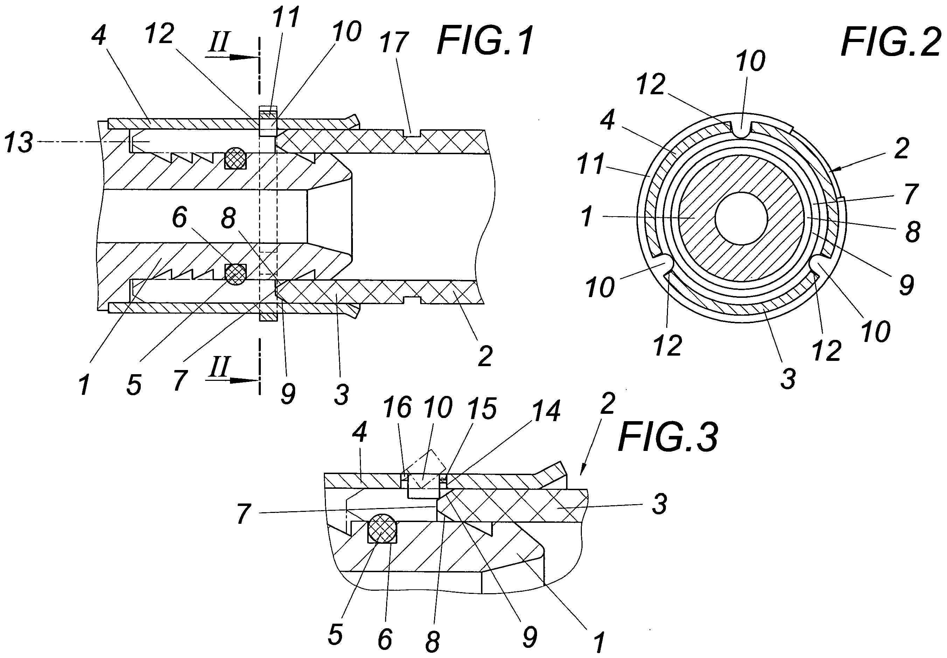

Zur abzugsicheren Halterung eines mit einem Druckmedium beaufschlagten Kunststoffrohrs, beispielsweise für Wasserleitungen im Bereich von Hausinstallationen, ist es bekannt, das auf einem mit einer Profilierung versehenen Anschlussnippel aufgeschobene Kunststoffrohr zwischen dem Anschlussnippel und einer Klemmhülse festzuklemmen. Die Abdichtung erfolgt dabei durch wenigstens einen in eine Umfangsnut des Anschlussnippels eingesetzten Dichtungsring, über den das Kunststoffrohr auf den Anschlussnippel aufgeschoben wird. Zu diesem Zweck ist das Anschlussende des Kunststoffrohrs im Bereich seines Innendurchmessers mit einer stirnseitigen Anfasung zu versehen, sodass der Dichtungsring beim Aufschieben des Kunststoffrohrs auf den Anschlussnippel unter einer elastischen Verformung in die Umfangsnut eingedrückt wird. Fehlt eine solche Anfasung, so besteht die Gefahr, dass das stirnseitig an den Dichtungsring anschlagende Anschlussende des Kunststoffrohrs den Dichtungsring aus seiner Umfangsnut drängt, wodurch die Abdichtung der Anschlussvorrichtung gefährdet wird, ohne dass diese Gefährdung erkannt werden kann. Dokument EP 1662190A2 offenbart eine Anschlussvorrichtung mit einem Anschlussnippel, eine Klemmhülse und einem Kunststoffrohr, wobei das mit einer stirnseitigen Anfasung im Bereich des Innendurchmessers versehene Anschlussende des Kunststoffrohrs zwischen dem Anschlussnippel und der Klemmhülse axial festgehalten ist und einen im profilierten Anschlussnippel gehaltenen Dichtungsring übergreift, wobei die Klemmhülse wenigstens einen radial einwärts vorstehenden, radial nach außen verlagerbaren Anschlag aufweist, siehe insbesondere die Figure 1.

Der Erfindung liegt somit die Aufgabe zugrunde, eine Anschlussvorrichtung für ein Kunststoffrohr an einem Anschlussnippel der eingangs geschilderten Art so auszugestalten, dass eine unzulässige Verlagerung des Dichtungsrings beim Anschließen des Kunststoffrohrs unterbunden wird.

Die Erfindung löst die gestellte Aufgabe durch eine Anschlussvorrichtung mit den technischen Merkmalen von Anspruch 1.

Unter der Voraussetzung, dass zugleich mit der Anfasung der Stirnseite des Anschlussendes des Kunststoffrohrs im Bereich des Innendurchmessers auch eine Anfasung im Bereich des Außendurchmessers erfolgt, um beispielsweise das axiale Einführen des Anschlussendes in die Klemmhülse zu erleichtern, kann diese Anfasung im Bereich des Außendurchmessers vorteilhaft für das Sicherstellen einer ordnungsgemäßen Abdichtung ausgenützt werden, wenn die Klemmhülse auf der Einschubseite des Dichtungsrings einen radial einwärts vorstehenden Anschlag aufweist, der über die äußere Anfasung des Anschlussendes des Kunststoffrohrs radial nach außen verlagert wird, bei einer nicht angefasten Stirnseite aber das axiale Vorschieben des Anschlussendes des Kunststoffrohrs gegen den Dichtungsring hin verhindert, weil der Anschlag zur Freigabe des Einschubweges eben nur über die Anlauffläche der äußeren Anfasung aus der Bahn des Kunststoffrohrs radial nach außen verlagert werden kann.

Solche Anschläge, die in der Praxis vorzugsweise über den Umfang der Klemmhülse verteilt vorgesehen werden, können zusätzlich zur axialen Sicherung des auf den Anschlussnippel aufgeschobenen und mit Hilfe der Klemmhülse klemmend festgehaltenen Kunststoffrohrs genützt werden. Zu diesem Zweck kann der wenigstens eine gegen eine Rückstellkraft radial nach außen verlagerbare Anschlag in der Anschlussstellung des Kunststoffrohrs in eine Umfangsnut des Kunststoffrohrs eingreifen. Der beim Einführen des Anschlussendes des Kunststoffrohrs zwischen Anschlussnippel und Klemmhülse aus der Bahn des Anschlussendes nach außen verlagerte Anschlag gleitet somit entlang des Anschlussendes, bis er aufgrund der wirksamen Rückstellkraft am Ende der Einschubbewegung in der vorgesehenen Anschlussstellung des Kunststoffrohrs in die hiefür vorgesehene Umfangsnut des Anschlussendes einrastet und damit das Kunststoffrohr in Auszugsrichtung gegenüber der Klemmhülse abstützt. Die sichtbare Eingriffslage des Anschlags zeigt außerdem die korrekte Anschlusslage des Anschlussendes des Kunststoffrohrs an.

Anschläge der Klemmhülse, die über eine äußere Anfasung des Anschlussendes als Anlauffläche radial nach außen verlagert werden können, können unterschiedlich gestaltet werden. So ist es beispielsweise möglich, dass der Anschlag an einem die Klemmhülse umschließenden, umfangsseitig offenen, federnden Sicherungsring vorgesehen ist und eine Öffnung in der Klemmhülse durchsetzt, sodass der Anschlag unter einer federnden Aufweitung des Sicherungsrings durch die Klemmhülsenöffnung radial auswärts verschoben wird, um den Weg zum Einschieben des Anschlussendes des Kunststoffrohrs freizugeben. Ohne eine solche stirnseitige Anfasung des Anschlussendes wirkt beim Anschlagen des Kuntstoffrohrs am Anschlag keine radial auswärts gerichtete Kraftkomponente. Der Anschlag stellt in diesem Fall eine Sperre für das Weiterschieben des Anschlussendes dar.

Der Anschlag kann aber auch der Klemmhülse zugeordnet werden und in einem Durchtritt der Klemmhülse gegen einen vorgegebenen Verlagerungswiderstand verstellbar gelagert sein. Dieser Verlagerungswiderstand wird dann bei einem Auflaufen des Anschlags auf die durch die Anfasung gebildete Anlauffläche aufgrund der radial wirksamen Kraftkomponenten überwunden, nicht aber bei einer axialen Anschlagbelastung durch eine nicht angefaste Stirnseite des Anschlussendes des Kunststoffrohrs. Besonders einfache Verhältnisse ergeben sich in diesem Zusammenhang, wenn der Anschlag über eine Sollbruchstelle in der Anschlaglage gehalten wird, weil dann die Sollbruchstelle den Verlagerungswiderstand bestimmt.

Obwohl eine radiale Verschiebung von der Klemmhülse zugeordneten Anschlägen im den jeweiligen Anschlag aufnehmenden Durchtritt grundsätzlich möglich ist, ergeben sich im Allgemeinen günstigere Konstruktionsbedingungen, wenn der Anschlag im Durchtritt der Klemmhülse verschwenkbar gelagert wird.

In der Zeichnung ist der Erfindungsgegenstand beispielsweise dargestellt. Es zeigen
- Fig. 1: eine erfindungsgemäße Anschlussvorrichtung in einem schematischen Längsschnitt,
- Fig. 2: diese Anschlussvorrichtung in einem Schnitt nach der Linie II-II der Fig. 1 und
- Fig. 3: eine Konstruktionsvariante eines Anschlags einer erfindungsgemäßen Anschlussvorrichtung ausschnittsweise im Bereich des Anschlags in einem größeren Maßstab.

Die Anschlussvorrichtung gemäß dem Ausführungsbeispiel weist einen Anschlussnippel 1 für ein Kunststoffrohr 2 einer nicht näher dargestellten Armatur auf, wobei das Anschlussende 3 zwischen dem Anschlussnippel 1 und einer Klemmhülse 4 festgeklemmt wird, beispielsweise durch das Einprägen von Umfangssicken. Die Abdichtung zwischen dem Anschlussnippel 1 und dem Anschlussende 3 des Kunststoffrohrs 2 wird durch wenigstens einen Dichtungsring 5 erreicht, der in eine Umfangsnut 6 des Anschlussnippels 1 eingesetzt ist. Damit der im unbelasteten Zustand über den Außenumfang des Anschlussnippels 1 vorstehende Dichtungsring 5 nicht beim Einschieben des Anschlussendes 3 des Kunststoffrohrs 2 in den Ringspalt zwischen dem Anschlussnippel 1 und der Klemmhülse 4 aus der Umfangsnut 6 gezwängt werden kann, ist die Stirnseite 7 des Anschlussendes 3 mit einer Anfasung 8 versehen.

Das abgelängte Kunststoffrohr 2 wird jedoch nicht nur im Bereich des Innendurchmessers, sondern auch im Bereich des Außendurchmessers mit einer Anfasung 9 versehen, um in einfacher Weise ein Aufschieben des Anschlussendes 3 des Kunststoffrohrs 2 auf den Anschlussnippel 1 zu verhindern, wenn das stirnseitige Ende des Kunststoffrohrs 2 nicht bearbeitet ist. Zu diesem Zweck sind der Klemmhülse 4 zwischen dem Aufschubende des Anschlussnippels 1 und des Dichtungsrings 5 radial einwärts vorstehende Anschläge 10 zugeordnet, die mit Hilfe der äußeren Anfasung 9 als Anlauffläche radial nach außen verlagert werden können, beim Fehlen dieser Anfasung 9 jedoch eine das weitere Aufschieben des Anschlussendes 3 auf den Anschlussnippel 1 verhindernde Sperre bilden.

Gemäß dem Ausführungsbeispiel nach den Fig. 1 und 2 sind diese über den Umfang der Klemmhülse 4 verteilten Anschläge 10 an einem umfangsseitig offenen, federnden Sicherungsring 11 vorgesehen, der die Klemmhülse 4 umschließt. Die Anschläge 10 selbst durchsetzen die Klemmhülse 4 in Öffnungen 12, wie dies insbesondere der Fig. 2 entnommen werden kann. Bei einer ordnungsgemäßen Anfasung 9 werden die Anschläge 10 durch das eingeschobene Anschlussende 3 des Kunststoffrohrs 2 unter einer Aufweitung des Sicherungsrings 11 radial nach außen verlagert, bis sie den Einschubweg für das Anschlussende 3 freigeben, sodass das Anschlussende 3 über den Dichtungsring 5 in die in der Fig. 1 strichpunktiert eingezeichnete Anschlussstellung 13 auf den Anschlussnippel 1 aufgeschoben werden kann. Fehlt die Anfasung 9, was das Vorliegen einer unbearbeiteten Stirnseite des Anschlussendes 3 des Kunststoffrohrs 2 bedeutet, so fehlt eine in radialer Richtung wirksame Kraftkomponente auf die Anschläge 10, die somit das weitere Einführen des Anschlussendes 3 in den Ringspalt zwischen Anschlussnippel 1 und Klemmhülse 4 sperren.

In der Fig. 3 ist eine Ausführungsvariante für die Anschläge 10 gezeigt, die der Klemmhülse 4 unmittelbar zugeordnet und jeweils in einem Durchtritt 14 der Klemmhülse 4 vorgesehen sind. Die Anordnung der Anschläge 10 innerhalb der Durchtritte 14 muss dabei derart sein, dass die Anschläge gegen einen vorgegebenen Verlagerungswiderstand verstellbar durch den Durchtritt 14 nach außen verlagert werden können. Dieser Verlagerungswiderstand muss bei einem nicht angefasten Anschlussende 3 des Kunststoffrohrs 2 unüberwindbar sein, sodass die Anschläge eine Sperre gegen ein weiteres Aufschieben des Anschlussendes 3 auf den Anschlussnippel 1 bilden. Mit einer Anfasung 9 als Anlauffläche und einer damit verbundenen zusätzlichen Kraftkomponente in radialer Richtung wird der Verlagerungswiderstand jedoch überwunden, sodass die Anschläge 10 den Einschubweg für das Anschlussende 3 des Kunststoffrohrs 2 freigeben. Besonders einfache Konstruktionsverhältnisse ergeben sich für die Festlegung eines solchen Verlagerungswiderstandes dann, wenn die Anschläge 10 über eine Sollbruchstelle 15 in der in vollen Linien gezeichneten Anschlagstellung gehalten werden. Diese Sollbruchstellen 15 können die Anschläge 10 von der Klemmhülse 4 trennen, sodass die Anschläge 10 aus den Durchtritten 14 herausfallen können. Sind die Anschläge 10 jedoch zusätzlich über ein Filmscharnier 16 mit der Klemmhülse 4 verbunden, so werden die Anschläge 10 durch das eingeschobene Anschlussende 3 des Kunststoffrohrs 2 über die Anfasung 9 nach außen geschwenkt, wie dies in der Fig. 3 strichpunktiert angedeutet ist. Diese dann über die Klemmhülse 4 vorstehenden Anschläge 10 bilden eine Anzeige zumindest für die ordnungsgemäße Ausbildung der Stirnseite des Anschlussendes 3.

Die radial einwärts gerichteten Anschläge 10 können zusätzlich zur axialen Sicherung des Kunststoffrohrs 2 auf dem Anschlussnippel 1 dienen, wenn diese Anschläge 10 beim Einführen des Anschlussendes 3 in den Ringspalt zwischen Anschlussnippel 1 und Klemmhülse 4 gegen eine federnde Rückstellkraft radial nach außen verlagert werden und beim Erreichen der Anschlussstellung 13 in eine Umfangsnut 17 des Kunststoffrohrs 2 einrasten, wie dies aus der Fig. 1 entnommen werden kann. Damit wird das Kunststoffrohr 2 über die Anschläge 10 in axialer Richtung gegenüber der Klemmhülse 4 abgestützt, was eine zusätzliche Auszugsicherung für das Kunststoffrohr 2 ergibt.

## Patentansprüche

1. Anschlussvorrichtung mit einem Anschlussnippel (1), einer Klemmhülse (4) und einem Kunststoffrohr (2), wobei das mit einer stirnseitigen Anfasung (9) im Bereich des Innen- und des Außendurchmessers versehene Anschlussende (3) des Kunststoffrohrs (2) zwischen dem Anschlussnippel (1) und der Klemmhülse (4) axial festgehalten ist und einen im profilierten Anschlussnippel (1) gehaltenen Dichtungsring (5) übergreift, wobei die Klemmhülse (4) wenigstens einen radial einwärts vorstehenden, nur mittels der stirnseitigen Anfasung (9) im Bereich des Außendurchmessers des Anschlussendes (3) als Anlauffläche radial nach außen verlagerbaren Anschlag (10), aufweist, und wobei der Anschlag (10) in Einsteckrichtung gesehen vor dem Dichtungsring (5) angeordnet ist.

2. Anschlussvorrichtung nach Anspruch 1, **dadurch gekennzeichnet, dass** der gegen eine Rückstellkraft radial nach außen verlagerbare Anschlag (10) in einer Anschlussstellung (13) des Anschlussendes (3) in eine Umfangsnut (17) des Kunststoffrohrs (2) eingreift.

3. Anschlussvorrichtung nach Anspruch 1 oder 2, **dadurch gekennzeichnet, dass** der Anschlag (10) an einem die Klemmhülse (4) umschließenden, umfangsseitig offenen, federnden Sicherungsring (11) vorgesehen ist und eine Öffnung (12) in der Klemmhülse (4) durchsetzt.

4. Anschlussvorrichtung nach Anspruch 1 oder 2, **dadurch gekennzeichnet, dass** der Anschlag (10) in einem Durchtritt (14) der Klemmhülse (4) gegen einen vorgegebenen Verlagerungswiderstand verstellbar gelagert ist.

5. Anschlussvorrichtung nach Anspruch 4, **dadurch gekennzeichnet, dass** der Anschlag (10) über eine Sollbruchstelle (15) in einer Anschlaglage gehalten ist.

6. Anschlussvorrichtung nach Anspruch 4 oder 5, **dadurch gekennzeichnet, dass** der Anschlag (10) im Durchtritt (14) der Klemmhülse (4) verschwenkbar gelagert ist.

## Claims

1. Connection device comprising a connection nipple (1), a clamping sleeve (4) and a synthetic material pipe (2), wherein the connection end (3) of the synthetic material pipe (2) which is provided with a front-side chamfer (9) in the region of the inner and outer diameter is axially retained between the connection nipple (1) and the clamping sleeve (4) and engages over a sealing ring (5) held in the profiled connection nipple (1), wherein the clamping sleeve (4) has at least one stop (10) which protrudes radially inwards and can be displaced radially outwards only by means of the front-side chamfer (9) in the region of the outer diameter of the connection end (3) as a contact surface, and wherein the stop (10) is arranged in front of the sealing ring (5) as seen in the insertion direction.

2. Connection device as claimed in claim 1, **characterised in that** the stop (10) which can be displaced radially outwards against a restoring force engages, in a connection position (13) of the connection end (3), into a circumferential groove (17) of the synthetic material pipe (2).

3. Connection device as claimed in claim 1 or 2, **characterised in that** the stop (10) is provided on a resilient locking ring (11) which surrounds the clamping sleeve (4), is open on the circumferential side and passes through an opening (12) in the clamping sleeve (4).

4. Connection device as claimed in claim 1 or 2, **characterised in that** the stop (10) is mounted in a passage (14) of the clamping sleeve (4) so as to be adjustable against a specified displacement resistance.

5. Connection device as claimed in claim 4, **characterised in that** the stop (10) is held in a stop position by means of a predetermined breaking point (15).

6. Connection device as claimed in claim 4 or 5, **characterised in that** the stop (10) is pivotably mounted in the passage (14) of the clamping sleeve (4).

## Revendications

1. Dispositif de raccordement, avec un embout de raccordement (1), une douille de serrage (4) et un tuyau en matière plastique (2), l'extrémité du raccordement (3), prévue avec un chanfrein (9) frontal dans la zone du diamètre intérieur et du diamètre extérieur, du tuyau en matière plastique (2) étant maintenue axialement entre l'embout de raccordement (1) et la douille de serrage (4), et chevauchant une bague d'étanchéité (5) tenue dans l'embout de raccordement (1) profilé, la douille de serrage (4) présentant au moins une butée (10) pouvant être décalée radialement vers l'extérieur, en tant que surface d'arrêt, dans la zone du diamètre extérieur de l'extrémité du raccordement (3), uniquement au moyen du chanfrein (9) frontal, et sortant radialement vers l'intérieur, et la butée (10) étant disposée, vu dans le sens d'insertion, devant la bague d'étanchéité (5).

2. Dispositif de raccordement selon la revendication 1, **caractérisé en ce que** la butée (10), pouvant être décalée radialement vers l'extérieur contre une force de rappel, vient en prise dans une position de raccordement (13) de l'extrémité du raccordement (3), dans une rainure circonférentielle (17) du tuyau en matière plastique (2).

3. Dispositif de raccordement selon la revendication 1 ou 2, **caractérisé en ce que** la butée (10) est prévue au niveau d'une bague de blocage (11) faisant ressort, ouverte côté périphérique, entourant la douille de serrage (5) et traverse une ouverture (12) dans la douille de serrage (4).

4. Dispositif de raccordement selon la revendication 1 ou 2, caractérisé en ce la butée (10) est placée ajustable dans un passage (14) de la douille de serrage (4) contre une résistance au déplacement prédéfinie.

5. Dispositif de raccordement selon la revendication 4, **caractérisé en ce que** la butée (10) est tenue dans une position de butée par le biais d'un point destiné à la rupture (15).

6. Dispositif de raccordement selon la revendication 4 ou 5, **caractérisé en ce que** la butée (10) peut être placée pivotante dans le passage (14) de la douille de serrage (4).
